# EUROPÄISCHE PATENTSCHRIFT

(11) **EP 2 802 464 B1**
(45) Veröffentlichungstag und Bekanntmachung des Hinweises auf die Patenterteilung: **03.04.2019**
(21) Anmeldenummer: 12798248.6
(22) Anmeldetag: 27.11.2012
(51) Int. Cl.: B60B 17/00

(54) **RADPROFIL**
WHEEL PROFILE
PROFIL DE ROUE

(30) Priorität: 11.01.2012 AT 182012
(43) Veröffentlichungstag der Anmeldung: 19.11.2014
(73) Patentinhaber: Siemens AG Österreich, 1210 Wien (AT)
(72) Erfinder: GRABNER, Gerald, A-8010 Graz (AT)
(74) Vertreter: Maier, Daniel Oliver
(86) Internationale Anmeldenummer: PCT/EP2012/073680
(87) Internationale Veröffentlichungsnummer: WO 2013/104458

(56) Entgegenhaltungen:
- EP-A2- 0 760 294
- WO-A1-2005/032852
- DE-A1-102006 034 896
- US-A- 1 783 705

## Beschreibung

### Technisches Gebiet

Die Erfindung betrifft ein Radprofil für ein Schienenfahrzeugrad gemäß dem Oberbegriff des Anspruchs 1. Ein solches Radprofil ist aus US 1783705 A und EP 0760294 A bekannt.

### Stand der Technik

Die Abstimmung des Rad/Schiene Kontakts hat einen wesentlichen Einfluss auf das Fahrverhalten von Schienenfahrzeugen. Dabei sind Parameter wie Fahrstabilität und -komfort bei hohen Geschwindigkeiten, das Bogenlaufverhalten und die Geräuschentwicklung zu optimieren. Ein weiterer wesentlicher Parameter ist der Verschleiß des Schienenfahrzeugrades, welcher durch eine ungünstige Gestaltung dieses Rad/Schiene Kontakts deutlich erhöht sein kann. Dieser Verschleiß kann durch eine niedrige Flächenpressung reduziert werden. Durch diese Flächenpressung stellt sich in den beteiligten, einander berührenden Körpern eine charakteristische Spannungsverteilung ein, wobei das Maximum der Spannung sich in der Regel im Inneren der beteiligten Körper befindet. Dadurch kann eine Verschleißform hervorgerufen werden, welche durch das Ausbröckeln (eng. "Spalling") von kleinen Teilen der Oberflächenstruktur charakterisiert ist. Dieses Phänomen tritt bei niedrigen Temperaturen aufgrund der dabei auftretenden Versprödung des Radreifenmetalls verstärkt auf.

Radprofile gemäß dem Stand der Technik können die genannten Anforderungen in Russland und in Europa gleichzeitig nicht erfüllen.

Beispielsweise bietet die Kombination aus dem in Russland gebräuchlichen Schienenprofil R65 mit einem in Europa gebräuchlichen, für Russland adaptierten Radprofil P8 zwar befriedigendes Laufverhalten bei hohen Geschwindigkeiten, aber kein akzeptables Verschleißverhalten. Das Radprofil VNIIZhT-RM70 des russischen Instituts für Eisenbahnwesen VNIIZhT bietet in dieser Kombination hingegen ein gutes Verschleißverhalten, führt jedoch zu sogenannten "slow body motions", d.h. Querschwingungen des Wagenkastens, die v.a. bei hohen Geschwindigkeiten den Fahrkomfort stark beeinträchtigen.

### Darstellung der Erfindung

Der Erfindung liegt daher die Aufgabe zugrunde, ein Radprofil anzugeben, welches die genannten Nachteile des Stands der Technik vermeidet. Insbesondere weist es in Kombination mit dem in Russland gebräuchlichen Schienenprofil R65 sowohl ein gutes Laufverhalten bei hohen Geschwindigkeiten als auch ein gutes Verschleißverhalten auf. Das erfindungsgemäße Radprofil ist auf ein aus Messungen ermitteltes, durchschnittlich verschlissenes Schienenprofil R65 abgestimmt und zeigt in dieser Kombination die vorteilhaften Eigenschaften in besonderem Maße.

Die Aufgabe wird durch ein Radprofil mit den Merkmalen des Anspruchs 1 gelöst. Vorteilhafte Ausgestaltungen sind Gegenstand untergeordneter Ansprüche.

Dem Grundgedanken der Erfindung nach wird ein Radprofil mit ausreichend hoher äquivalenter Konizität beschrieben, welches gleichzeitig eine niedrige Flächenpressung an der Kontaktstelle mit einer Schiene aufweist.

Erfindungsgemäß weist das Radprofil an jeder Berührstelle mit dem Schienenprofil ein im Wesentlichen konstantes Verhältnis der Krümmung des Radprofils zu der Krümmung des Schienenprofils auf. Die Krümmung ist dabei als die Richtungsänderung pro durchlaufener Länge eines genügend kurzen Kurvenstücks definiert und wird sowohl bei dem Schienenprofil als auch bei dem Radprofil in der Ebene senkrecht zur Fahrtrichtung angenommen.

Das erfindungsgemäße Radprofil eignet sich vorteilhafterweise für Räder von Hochgeschwindigkeitsfahrzeugen mit Spitzengeschwindigkeiten größer als 200km/h.

Die Herstellung des Radprofils erfolgt zweckmäßigerweise mittels Radsatz-Drehmaschinen und kann bereits bei der Erstausrüstung des Schienenfahrzeugs erfolgen, bzw. kann ein bestehendes Schienenfahrzeugrad mit dem erfindungsgemäßen Radprofil ausgestattet werden, sofern die Verschleißgrenzen nicht überschritten sind.

**Tabelle 1**

| | | | |
|---|---|---|---|
| H1m | -49,500 | 11,049 | |
| G1m | -54,353 | 18,030 | |
| F1m | -60,569 | 10,846 | |
| Fm | -24,745 | 19,139 | |
| P5m | -15,270 | 46,421 | |
| P4m | 0,679 | 116,902 | |
| Em | 18,591 | 215,474 | |
| P3m | 13,629 | 179,524 | |
| P2m | 20,961 | 264,572 | |
| P1m | 21,273 | 269,170 | |
| C1m | 28,502 | -31,577 | |
| H2 | -70,000 | 10,942 | |
| H1 | -60,926 | 28,070 | |
| S | -54,353 | 30,030 | |
| G1 | -46,501 | 27,104 | |
| F1 | -40,365 | 18,199 | |
| G | -38,840 | 14,009 | |
| F | -29,729 | 4,992 | |
| P5 | -24,954 | 3,623 | |
| P4 | -20,087 | 2,631 | |
| E | -10,990 | 1,177 | |
| P3 | -1,834 | 0,151 | |
| D0 | 0,000 | 0,000 | x |
| P2 | 2,970 | -0,219 | |
| P1 | 7,779 | -0,503 | |
| C2 | 30,000 | -1,614 | |
| C1 | 32,299 | -1,818 | |
| B | 59,000 | -5,225 | |
| A | 65,000 | -11,225 | |
| | Y | Z | |

| | | | |
|---|---|---|---|
| Werte in Millimeter | | | |

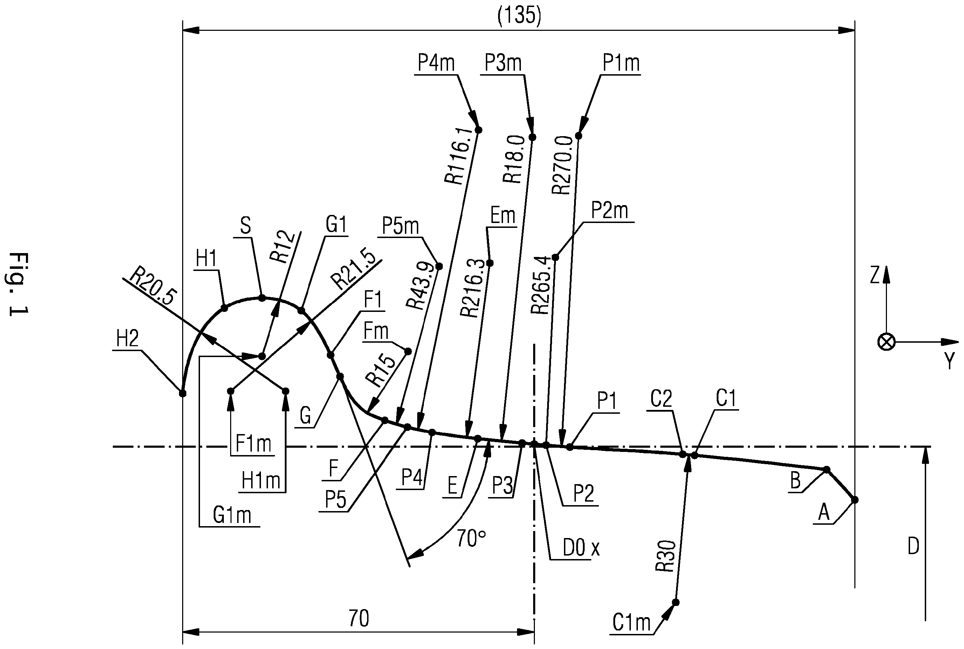

Tabelle 1 stellt die y - z Koordinaten eines erfindungsgemäßen Radprofils in Listenform dar. Die Bezeichnungen der entsprechenden Punkte der Radprofiloberfläche entsprechen dem in Fig.1 bildlich dargestellten Radprofil. Der Koordinatenursprung ist der Punkt D0 der Radprofiloberfläche. Die Y-Achse erstreckt sich zu positiven Werten in Richtung in Richtung des Radprofilauslaufes (Schienenfahrzeugaußenseitig), zu negativen Werten in Richtung des Spurkranzes. Die Z-Achse erstreckt sich zu positiven Werten in Richtung größerer Durchmesser des Schienenfahrzeugrades.

### Kurzbeschreibung der Zeichnungen

Es zeigen beispielhaft:
**Fig.1** Ein erfindungsgemäßes Radprofil.

### Ausführung der Erfindung

**Fig.1** zeigt beispielhaft und schematisch ein erfindungsgemäßes Radprofil. Es ist das in Tab.1 in Listenform beschriebene Radprofil in einer bemaßten Schnittdarstellung gezeigt. Die Positionen der in Tab.1 angeführten Punkte der Radprofiloberfläche sind beschrieben, ebenso die Lage und Ausrichtung des Koordinatensystems.

## Patentansprüche

1. Radprofil für ein Schienenfahrzeugrad, welches in Zusammenwirkung mit einem Schienenprofil an jeder Berührstelle des Radprofils mit dem Schienenprofil ein im Wesentlichen konstantes Verhältnis der Krümmung des Radprofils zu der Krümmung des Schienenprofils aufweist, **dadurch gekennzeichnet, dass**
die Zusammenhänge der x- mit den y-Koordinaten des in der Figur 1 der Zeichnungen dargestellten Radprofils gemäß der Tabelle 1 der Beschreibung gestaltet sind.

2. Schienenfahrzeugrad, **dadurch gekennzeichnet, dass** das Radprofil des Schienenfahrzeugrades gemäß Anspruch 1 gestaltet ist.

3. Schienenfahrzeug, **dadurch gekennzeichnet, dass** mindestens ein Rad des Schienenfahrzeugs gemäß Anspruch 2 gestaltet ist.

## Claims

1. Wheel profile for a rail vehicle wheel, which has an essentially constant relationship between the curvature of the wheel profile and the curvature of the rail profile in conjunction with a rail profile at each point of contact of the wheel profile with the rail profile, **characterised in that** the correlations of the x and y coordinates of the wheel profile shown in Figure 1 of the drawings are modelled in accordance with Table 1 of the description.

2. Rail vehicle wheel, **characterised in that** the wheel profile of the rail vehicle wheel is modelled in accordance with claim 1.

3. Rail vehicle, **characterised in that** at least one wheel of the rail vehicle is modelled in accordance with claim 2.

## Revendications

1. Profil de roue pour une roue de véhicule ferroviaire, qui, en association avec un profil de rail, présente au niveau de chaque point de contact du profil de roue avec ledit profil de rail un comportement essentiellement constant de la courbure du profil de roue par rapport à la courbure du profil de rail, **caractérisé en ce que**
les relations des coordonnées x avec les coordonnées y du profil de roue représenté sur la figure 1 des présentes figures sont constituées conformément au tableau 1 de la description.

2. Roue de véhicule ferroviaire, **caractérisé en ce que** le profil de roue de la roue de véhicule ferroviaire est constitué conformément à la revendication 1.

3. Véhicule ferroviaire, **caractérisé en ce que**
au moins une roue du véhicule ferroviaire est constituée conformément à la revendication 2.
